# EUROPEAN PATENT APPLICATION

(11) **EP 2 594 909 A1**
(43) Date of publication of application: **22.05.2013**
(21) Application number: 11806485.6
(22) Date of filing: 13.07.2011
(51) Int. Cl.: G01F 1/66, H04R 17/00

(54) **ULTRASONIC FLOW MEASUREMENT UNIT AND ULTRASONIC FLOWMETER USING SAME**

(30) Priority: 15.07.2010 JP 2010160371
(71) Applicant: Panasonic Corporation, Kadoma-shi Osaka 571-8501 (JP)
(72) Inventor: FUJII, Yuji, Chuo-ku, Osaka 540-6207 (JP); SATOU, Masato, Chuo-ku, Osaka 540-6207 (JP); GOTOU, Hirokazu, Chuo-ku, Osaka 540-6207 (JP); WATANABE, Aoi, Chuo-ku, Osaka 540-6207 (JP)
(74) Representative: Schwabe - Sandmair - Marx
(86) International application number: PCT/JP2011/003996
(87) International publication number: WO 2012/008151

(57) **Abstract**

Provided is ultrasonic flow measuring unit (50) including: measurement path (7) through which fluid to be measured (16) flows; a pair of ultrasonic transducers (1, 9) disposed respectively upstream and downstream of measurement path (7) and operable to transmit and receive an ultrasonic signal; and ultrasonic transducer attachment unit (8) disposed in measurement path (7). Each of ultrasonic transducers (1, 9) includes piezoelectric element (4), terminal (12) for applying a voltage to piezoelectric element (4), and acoustic matching layer (5) adhered to a transmitting surface of terminal (12). Ultrasonic transducer (1, 9) is fixed to ultrasonic transducer attachment unit (8) using an elastic coating material (13).

## Description

### [Technical Field]

The present invention relates to an ultrasonic flow measuring unit capable of measuring a flow rate of a fluid to be measured by measuring propagation time of ultrasonic waves using a pair of ultrasonic transducers, and an ultrasonic flow meter using this ultrasonic flow measuring unit.

### [Background Art]

A conventional ultrasonic flow measuring unit 100 will be described.

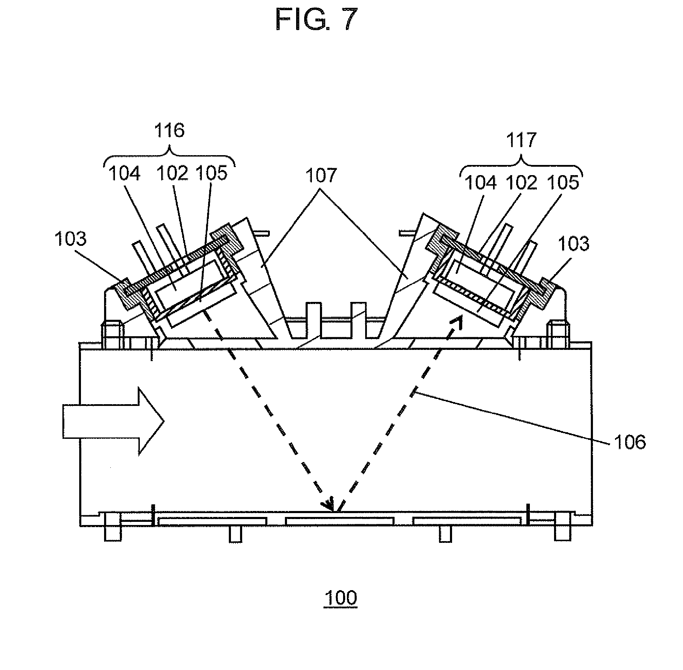

FIG. 7 is a view for illustration of a cross-sectional configuration of conventional ultrasonic flow measuring unit 100.

Conventional ultrasonic flow measuring unit 100 includes ultrasonic transducers 116 and 117 with improved reliability by each configuring such that metal or resin case 102 encloses piezoelectric element 104. A flow rate of a fluid to be measured through measurement path 107 is calculated by measuring time required for ultrasonic waves to propagate from ultrasonic transducer 116 to ultrasonic transducer 117 in ultrasonic propagation path 106.

At this time, in practice, when ultrasonic waves are transmitted from ultrasonic transducer 116, the ultrasonic waves are propagated through a housing of measurement path 107 and transmitted to ultrasonic transducer 117 in addition to ultrasonic propagation path 106 passing through acoustic matching layer 105. As a result, it is often not possible to measure the propagation time correctly and measurement accuracy decreases.

In order to address this problem, it is a common practice that ultrasonic transducers 116 and 117 are attached with elastic oscillation suppression units 103 made of such as rubber interposed so that oscillation of transmitting ultrasonic transducer 116 may not be propagated to receiving ultrasonic transducer 117 through the housing of measurement path 107 (see PTL 1, for example).

However, when using the conventional ultrasonic transducers enclosed by a metal or resin case, it is difficult to realize a less expensive ultrasonic flow measuring unit and an ultrasonic flow meter using such a measuring unit. More specifically, there is a problem that the number of steps of assembling and members such as oscillation suppression units for assembling ultrasonic transducers are required, in addition to a problem of increased material costs for the ultrasonic transducers.

### [Citation List]

### [Patent Literature]

[PTL 1]
Unexamined Japanese Patent Publication No. 2008-309803

### [Summary of Invention]

An ultrasonic flow measuring unit includes: a measurement path through which a fluid to be measured flows; a pair of ultrasonic transducers disposed respectively upstream and downstream of the measurement path and operable to transmit and receive an ultrasonic signal; and an ultrasonic transducer attachment unit disposed in the measurement path. Each of the ultrasonic transducers includes a piezoelectric element, a terminal for applying a voltage to the piezoelectric element, and an acoustic matching layer adhered to a transmitting surface of the terminal. The ultrasonic transducer is fixed to the ultrasonic transducer attachment unit using an elastic coating material.

With this, it is possible to eliminate necessity of a metal or resin case that has been used in order to improve reliability of the ultrasonic transducer, as well as an oscillation suppression unit for attaching the ultrasonic transducer.

According to the ultrasonic flow meter of the present invention, as it is not necessary to provide a case for each ultrasonic transducer, a material cost for an ultrasonic transducer can be decreased. Further, as a material cost for a member to attach an ultrasonic transducer is decreased and the number of steps of assembling the ultrasonic transducer is reduced, it is possible to realize a less expensive ultrasonic flow meter.

### [Brief Description of Drawings]

[FIG. 1]

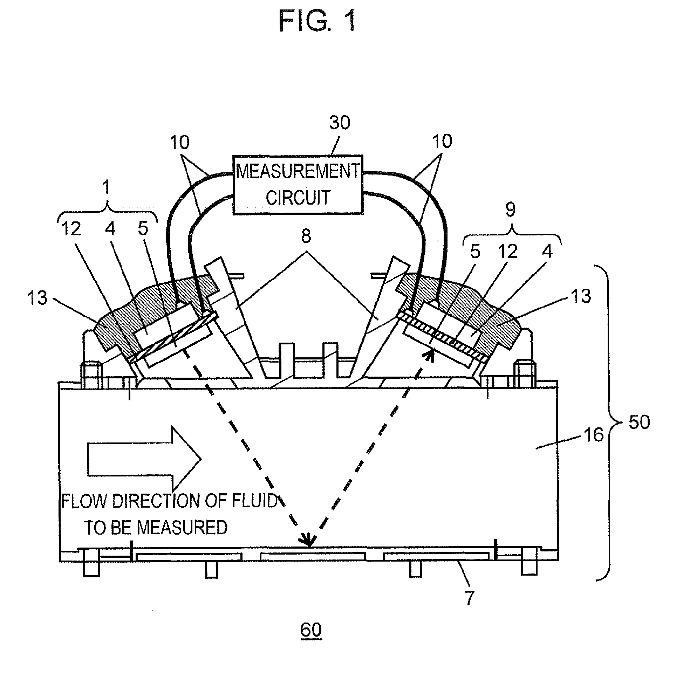

   FIG. 1 is a view for illustration of a cross-sectional configuration of an ultrasonic flow measuring unit and an ultrasonic flow meter using the same according to a first exemplary embodiment of the present invention.
[FIG. 2]

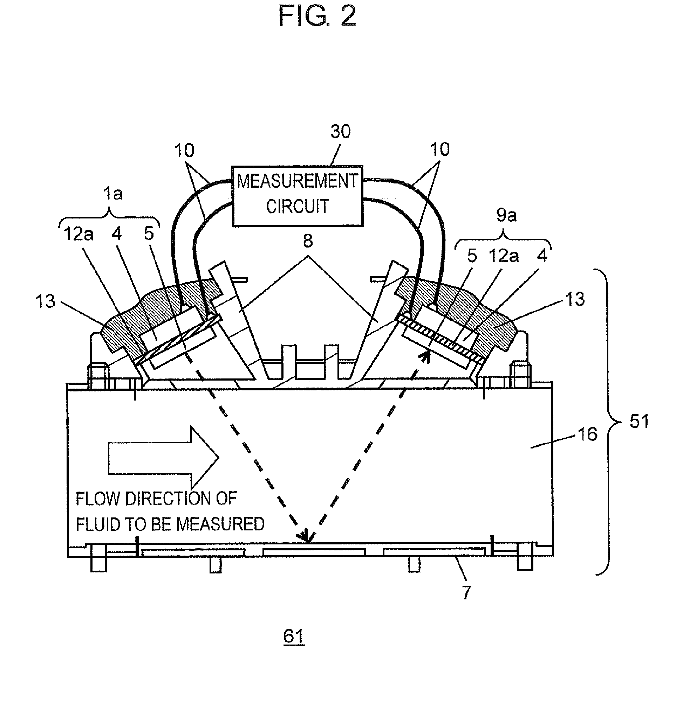

   FIG. 2 is a view for illustration of a cross-sectional configuration of an ultrasonic flow measuring unit and an ultrasonic flow meter using the same according to a second exemplary embodiment of the present invention.
[FIG. 3A]

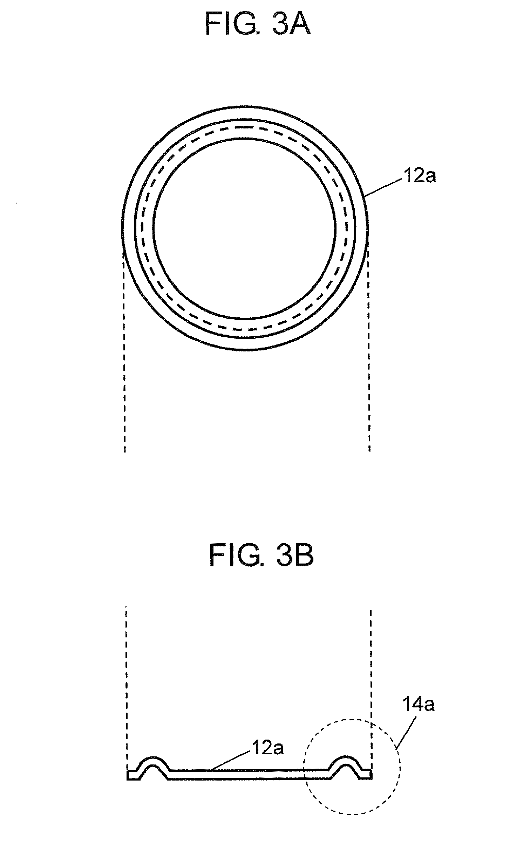

   FIG. 3A is a plan view illustrating a shape of a terminal of an ultrasonic transducer of the ultrasonic flow measuring unit according to the second exemplary embodiment of the present invention.
[FIG. 3B]
   FIG. 3B is a side view illustrating the shape of the terminal of the ultrasonic transducer of the ultrasonic flow measuring unit according to the second exemplary embodiment of the present invention.
[FIG. 4A]

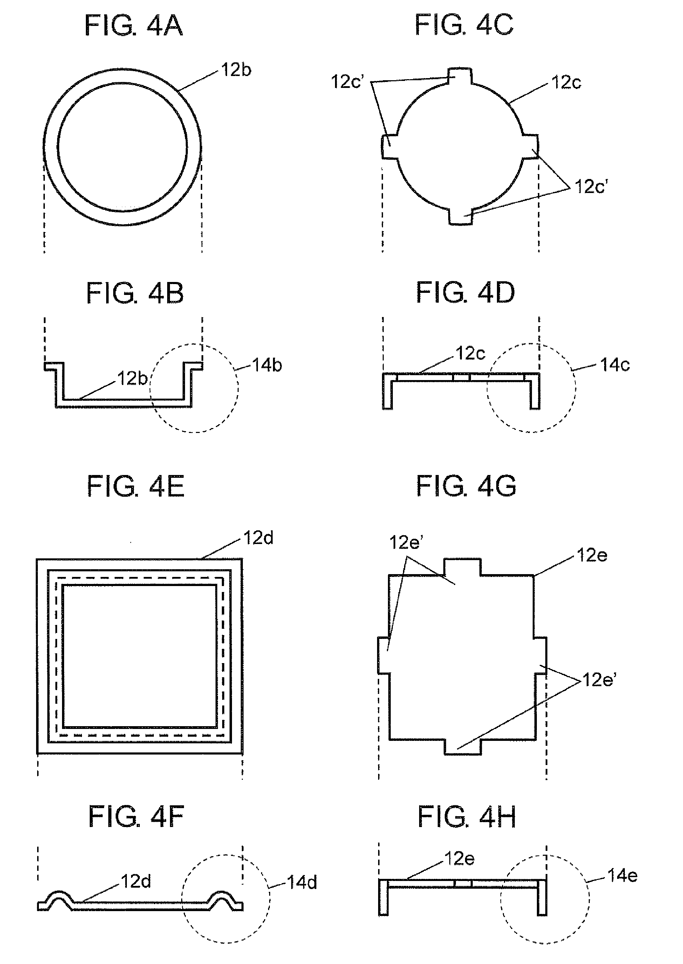

   FIG. 4A is a plan view illustrating a configuration of different terminal 12b of the ultrasonic flow measuring unit according to the second exemplary embodiment of the present invention.
[FIG. 4B]
   FIG. 4B is a side view illustrating a configuration of different terminal 12b of the ultrasonic flow measuring unit according to the second exemplary embodiment of the present invention.
[FIG. 4C]
   FIG. 4C is a plan view illustrating a configuration of different terminal 12c of the ultrasonic flow measuring unit according to the second exemplary embodiment of the present invention.
[FIG. 4D]
   FIG. 4D is a side view illustrating a configuration of different terminal 12c of the ultrasonic flow measuring unit according to the second exemplary embodiment of the present invention.
[FIG. 4E]
   FIG. 4E is a plan view illustrating a configuration of different terminal 12d of the ultrasonic flow measuring unit according to the second exemplary embodiment of the present invention.
[FIG. 4F]
   FIG. 4F is a side view illustrating a configuration of different terminal 12d of the ultrasonic flow measuring unit according to the second exemplary embodiment of the present invention.
[FIG. 4G]
   FIG. 4G is a plan view illustrating a configuration of different terminal 12e of the ultrasonic flow measuring unit according to the second exemplary embodiment of the present invention.
[FIG. 4H]
   FIG. 4H is a side view illustrating a configuration of different terminal 12e of the ultrasonic flow measuring unit according to the second exemplary embodiment of the present invention.
[FIG. 5]

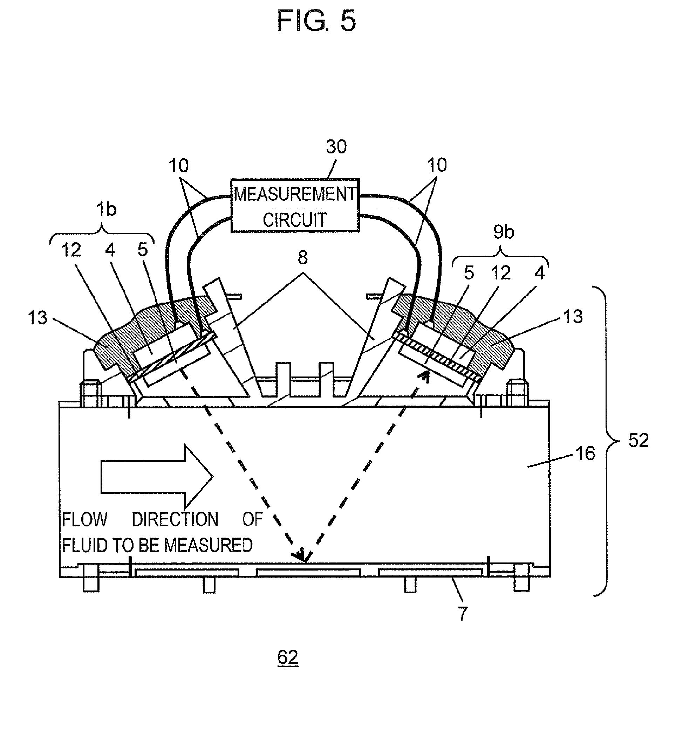

   FIG. 5 is a view for illustration of a cross-sectional configuration of an ultrasonic flow measuring unit and an ultrasonic flow meter using the same according to a third exemplary embodiment of the present invention.
[FIG. 6A]

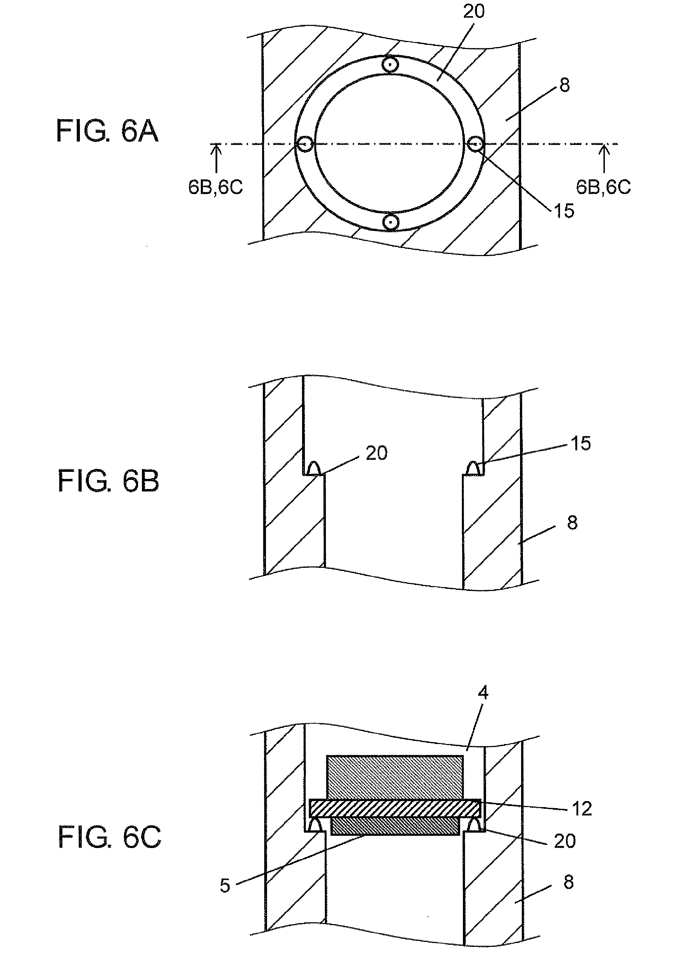

   FIG. 6A is a plan view illustrating a configuration of a contact portion between an ultrasonic transducer and an ultrasonic transducer attachment unit of the ultrasonic flow measuring unit according to the third exemplary embodiment of the present invention, when viewed in a direction of attachment of a terminal.
[FIG. 6B]
   FIG. 6B is a cross-sectional view of the contact portion between the ultrasonic transducer and the ultrasonic transducer attachment unit of the ultrasonic flow measuring unit according to the third exemplary embodiment of the present invention.
[FIG. 6C]
   FIG. 6C is a cross-sectional view illustrating the ultrasonic flow measuring unit according to the third exemplary embodiment of the present invention in a state in which a piezoelectric element and an acoustic matching layer are assembled to a measurement path while the piezoelectric element and the acoustic matching layer are adhered to a terminal for applying a voltage to the piezoelectric element.
[FIG. 7]
   FIG. 7 is a view for illustration of a cross-sectional configuration of a conventional ultrasonic flow measuring unit.

### [Description of Embodiments]

### (First Exemplary Embodiment)

First, a first exemplary embodiment according to the present invention will be described.

FIG. 1 is a view for illustration of a cross-sectional configuration of ultrasonic flow measuring unit 50 and ultrasonic flow meter 60 using the same according to the first exemplary embodiment of the present invention.

Ultrasonic flow measuring unit 50 includes measurement path 7 that is made of resin and through which fluid to be measured 16 flows, ultrasonic transducer attachment unit 8 provided for measurement path 7, and a pair of ultrasonic transducers 1 and 9 that are able to transmit and receive an ultrasonic signal.

In ultrasonic flow measuring unit 50, the pair of ultrasonic transducers 1 and 9 are respectively provided upstream and downstream of measurement path 7.

Differences between ultrasonic flow measuring unit 50 and conventional ultrasonic flow measuring unit 100 will be described. Conventional ultrasonic flow measuring unit 100 includes ultrasonic transducers 116 and 117 each singly enclosed by case 102 and attached to a housing of measurement path 107 using oscillation suppression unit 103 (see FIG. 7).

By contrast, according to ultrasonic flow measuring unit 50, ultrasonic transducers 1 and 9 are each configured such that piezoelectric element 4 and acoustic matching layer 5 are adhered to terminal 12 for applying a voltage to piezoelectric element 4. Acoustic matching layer 5 is adhered to a transmitting surface and a receiving surface of terminal 12. In addition, ultrasonic transducers 1 and 9 are directly attached to ultrasonic transducer attachment unit 8.

Further, lead wires 10 for applying a voltage to piezoelectric element 4, or for connecting with measurement circuit 30 that measures a voltage generated at piezoelectric element 4 are joined to terminal 12 and piezoelectric element 4. Ultrasonic flow measuring unit 50 and measurement circuit 30 constitute ultrasonic flow meter 60.

According to ultrasonic flow measuring unit 50, in order to prevent oscillation of piezoelectric element 4 from propagating to measurement path 7 and in order to increase reliability of an electrode portion of piezoelectric element 4, elastic coating material 13 is, for example, applied around piezoelectric element 4 and fixes piezoelectric element 4 to ultrasonic transducer attachment unit 8.

With such a configuration, while ensuring reliability of ultrasonic transducers 1 and 9, it is possible to eliminate necessity of oscillation suppression units 103 as attachment members for ultrasonic transducers 1 and 9, and whereby a material cost can be decreased. In addition, it is possible to decrease the number of steps of assembling ultrasonic transducers 1 and 9.

By ultrasonic flow measuring unit 50 and ultrasonic flow meter 60 using the same, propagation time of ultrasonic waves after an ultrasonic signal is transmitted from one ultrasonic transducer 1 and propagated through fluid to be measured 16 until the ultrasonic signal is received by the other ultrasonic transducer 9 is measured. With this, ultrasonic flow measuring unit 50 and ultrasonic flow meter 60 capable of measuring a flow rate of fluid to be measured 16 flowing through measurement path 7 can be realized at a lower cost.

### (Second Exemplary Embodiment)

Next, a second exemplary embodiment according to the present invention will be described.

FIG. 2 is a view for illustration of a cross-sectional configuration of ultrasonic flow measuring unit 51 and ultrasonic flow meter 61 using the same according to the second exemplary embodiment of the present invention.

Further, FIG. 3A is a plan view illustrating a shape of terminal 12a of ultrasonic transducers 1a and 9a of ultrasonic flow measuring unit 51 according to the second exemplary embodiment of the present invention, and FIG. 3B is a side view of these. It should be noted that, other than a configuration of terminal 12a, configurations of ultrasonic flow measuring unit 51 and ultrasonic flow meter 61 according to this embodiment are the same as those of ultrasonic flow measuring unit 50 and ultrasonic flow meter 60 described according to the first exemplary embodiment, and descriptions for these configurations are omitted.

As illustrated in FIG. 3A and FIG. 3B, concave oscillation absorbing portion 14a is provided near an outer circumference portion of terminal 12a at which terminal 12a is brought into contact with ultrasonic transducer attachment unit 8. Ultrasonic transducers 1a and 9a are positioned by oscillation absorbing portion 14a being brought into contact with ultrasonic transducer attachment unit 8. Providing oscillation absorbing portion 14a makes oscillation of piezoelectric element 4 less transmissive to measurement path 7. With this, as it is possible to reduce an influence of the oscillation of piezoelectric element 4, ultrasonic flow meter 61 with improved measurement accuracy can be realized at a lower cost.

It should be noted that the shape of terminal 12a is not limited to that shown in FIG. 3A and FIG. 3B. Any shape can be employed as long as the oscillation of piezoelectric element 4 becomes less transmissive to measurement path 7.

FIG. 4A to FIG. 4H are views respectively illustrating configurations of different terminals 12b to 12e of ultrasonic flow measuring unit 51 according to the second exemplary embodiment of the present invention.

As illustrated in FIG. 4A and FIG. 4B, it is possible to provide terminal 12b having oscillation absorbing portion 14b with a bent structure around an outer circumference portion. Further, as illustrated in FIG. 4C and FIG. 4D, it is possible to provide terminal 12c configured such that extending portion 12c' is provided around an outer circumference portion and bent to form oscillation absorbing portion 14c.

Moreover, as illustrated in FIG. 4E and FIG. 4F, it is possible to provide terminal 12d configured so as to have a substantially square outline having an outer circumference portion provided with concave oscillation absorbing portion 14d. Furthermore, as illustrated in FIG. 4G and FIG. 4H, it is possible to provide terminal 12e configured such that extending portion 12e' is provided around an outer circumference portion and bent to form oscillation absorbing portion 14e.

As described above, according to this embodiment, it is possible to further reduce the influence of the oscillation of piezoelectric element 4 as compared to ultrasonic flow measuring unit 50 and ultrasonic flow meter 60 described in the first exemplary embodiment.

By ultrasonic flow measuring unit 51 and ultrasonic flow meter 61 according to this embodiment, propagation time after an ultrasonic signal is transmitted from one ultrasonic transducer 1a and propagated through fluid to be measured 16 until received by the other ultrasonic transducer 9a is measured. With this, it is possible to improve measurement accuracy of ultrasonic flow measuring unit 51 and ultrasonic flow meter 61 capable of measuring a flow rate of fluid to be measured 16 flowing through measurement path 7.

### (Third Exemplary Embodiment)

A third exemplary embodiment according to the present invention will be described.

FIG. 5 is a view for illustration of a cross-sectional configuration of ultrasonic flow measuring unit 52 and ultrasonic flow meter 62 using the same according to the third exemplary embodiment of the present invention.

Further, FIG. 6A is a plan view illustrating a configuration of contact portion 20 between each of ultrasonic transducers 1b and 9b and ultrasonic transducer attachment unit 8 of ultrasonic flow measuring unit 52 according to the third exemplary embodiment of the present invention, when viewed in a direction of attachment of terminal 12, and FIG. 6B is a cross-sectional view of contact portion 20. In addition, FIG. 6C is a cross-sectional view illustrating ultrasonic flow measuring unit 52 according to the third exemplary embodiment of the present invention in a state in which piezoelectric element 4 and acoustic matching layer 5 are assembled to measurement path 7 while piezoelectric element 4 and acoustic matching layer 5 are adhered to terminal 12 for applying a voltage to the piezoelectric element.

It should be noted that, other than configuration of contact portions 20 between ultrasonic transducers 1b and 9b and ultrasonic transducer attachment unit 8, configurations of ultrasonic flow measuring unit 52 and ultrasonic flow meter 62 according to this embodiment are the same as those of ultrasonic flow measuring unit 50 and ultrasonic flow meter 60 described according to the first exemplary embodiment, and descriptions for these configurations are omitted. Further, as terminal 12, terminals 12a to 12e described in the second exemplary embodiment can be used.

As illustrated in FIG. 6A to FIG. 6C, contact portion 20 between each of ultrasonic transducers 1b and 9b and ultrasonic transducer attachment unit 8 is provided with an annular flat portion. On the flat portion, four projections 15 are provided. It should be noted that the number of projections 15 of the present invention is not limited to four, and can be any number.

With projections 15, terminal 12 for applying a voltage to piezoelectric element 4 is bought into point contact with ultrasonic transducer attachment unit 8 of measurement path 7 and is positioned.

By employing such a configuration, it is possible to further reduce the influence of the oscillation of piezoelectric element 4 as compared to ultrasonic flow measuring unit 50 and ultrasonic flow meter 60 described in the first exemplary embodiment and ultrasonic flow measuring unit 51 and ultrasonic flow meter 61 described in the second exemplary embodiment.

Using ultrasonic flow measuring unit 52 and ultrasonic flow meter 62 according to this embodiment, propagation time after an ultrasonic signal is transmitted from one ultrasonic transducer 1b and propagated through fluid to be measured 16 until received by the other ultrasonic transducer 9b is measured. With this, it is possible to improve measurement accuracy of ultrasonic flow measuring unit 52 and ultrasonic flow meter 62 capable of measuring a flow rate of fluid to be measured 16 flowing through measurement path 7.

### [Industrial Applicability]

As described above, according to the present invention, as it is not necessary to provide a case for each ultrasonic transducer, a material cost of ultrasonic transducer can be decreased. Further, as a material cost for a member to attach an ultrasonic transducer is decreased and the number of steps of assembling the ultrasonic transducer is reduced, it is possible to realize a less expensive ultrasonic flow meter.

Thus, the present invention can realize a less expensive flow meter as compared to the conventional ultrasonic flow meter, and can be applicable to a flow rate measurement standard as well as to a gas meter and a water meter.

### [Reference Signs List]

| | |
|---|---|
| 1, 1a, 1b, 9, 9a, 9b | Ultrasonic transducer |
| 4 | Piezoelectric element |
| 5 | Acoustic matching layer |
| 7 | Measurement path |
| 8 | Ultrasonic transducer attachment unit |
| 10 | Lead wire |
| 12, 12a, 12b, 12c, 12d, 12e | Terminal |
| 12c', 12e' | Extending portion |
| 13 | Coating material |
| 14a, 14b, 14c, 14d, 14e | Oscillation absorbing portion |
| 15 | Projection |
| 16 | Fluid to be measured |
| 20 | Contact portion |
| 30 | Measurement circuit |
| 50, 51, 52 | Ultrasonic flow measuring unit |
| 60, 61, 62 | Ultrasonic flow meter |

## Claims

1. An ultrasonic flow measuring unit comprising:
a measurement path through which a fluid to be measured flows;
a pair of ultrasonic transducers disposed respectively upstream and downstream of the measurement path and operable to transmit and receive an ultrasonic signal; and
an ultrasonic transducer attachment unit disposed in the measurement path, wherein
each of the ultrasonic transducers includes a piezoelectric element, a terminal for applying a voltage to the piezoelectric element, and an acoustic matching layer adhered to a transmitting surface of the terminal, and
the ultrasonic transducer is fixed to the ultrasonic transducer attachment unit using an elastic coating material.

2. The ultrasonic flow measuring unit according to claim 1, wherein
the terminal includes an oscillation absorbing portion around an outer circumference portion of the terminal, and
the ultrasonic transducer is positioned by the oscillation absorbing portion being brought into contact with the ultrasonic transducer attachment unit.

3. The ultrasonic flow measuring unit according to claim 1, wherein
the ultrasonic transducer is positioned by the outer circumference portion of the terminal being brought into point contact with the ultrasonic transducer attachment unit.

4. The ultrasonic flow measuring unit according to claim 2, wherein
the ultrasonic transducer is positioned by the outer circumference portion of the terminal being brought into point contact with the ultrasonic transducer attachment unit.

5. An ultrasonic flow meter using the ultrasonic flow measuring unit according to one of claims 1 to 4, comprising:
a measurement circuit operable to measure propagation time of an ultrasonic signal after being transmitted from one of the pair of ultrasonic transducers and propagated through the fluid to be measured until being received by the other of the pair of ultrasonic transducers.
